# EUROPEAN PATENT APPLICATION

(11) **EP 2 740 999 A1**
(43) Date of publication of application: **11.06.2014**
(21) Application number: 12195925.8
(22) Date of filing: 06.12.2012
(51) Int. Cl.: F21V 19/02, F21V 21/088, F21V 21/092, A01K 63/06

(54) **Aquarium lamp bracket assembly**

(71) Applicant: Eiko Electric Products Corp., Taipei 114 (TW)
(72) Inventor: Wang, Yu-Chin, 114 Taipei (TW)
(74) Representative: K & H Bonapat

(57) **Abstract**

An aquarium lamp bracket assembly includes a bracket (10;100) including a base frame (11;110), a coupling tube (12;120) located at the front side of the base frame (11;110) and defining an axial coupling hole (13;130) and a longitudinal opening (14;140) and a clamping member (16;160) extended from the back side of the base frame (11;110) and defining with the elongated base member a clamping mouth (17;170) for fastening to a glass panel (91) of an aquarium housing (90), and an adjustable lamp tube holder (20) including a pivot shaft (21) angularly adjustably mounted in the coupling hole (13;130) in the coupling tube (12;120), a lamp tube holder shell (23) holding a lamp tube (30) and a neck (22) connected between the pivot shaft (21) and the lamp tube holder shell (23) and inserted through the longitudinal opening (14;140) of the bracket (10;100).

## Description

### BACKGROUND OF THE INVENTION

### 1. Field of the Invention:

The present invention relates to lighting technology for aquarium and more particularly, to an aquarium lamp bracket assembly, which can be conveniently fastened to one glass panel of an aquarium housing to hold a lamp tube in an angular position adjustable manner.

### 2. Description of the Related Art:

An aquarium needs to be equipped with a lighting device at the top side to provide illumination. An early design of lighting device for aquarium generally comprises a fluorescent lamp tube, a lampshade surrounding the upper side of the fluorescent lamp tube, and a mounting device mountable at an aquarium housing to hold the lampshade and the fluorescent lamp tube.

However, when a conventional mounting device is fastened to an aquarium to hold a lighting device, it does not allow adjustment of the radiating angle of the light device.

Taiwan Utility Model M273952 discloses a lighting device for aquarium, entitled "Three-dimensional space adjustable lamps and lanterns". This design of lighting device does not occupy much aquarium top space and allows adjustment of the radiating direction of the lamp tube. However, the mounting structure of this design of lighting device uses a complicated joint for allowing adjustment of the radiating angle of the lamp tube. The fabrication of this complicated joint requires much labor and time, resulting in high cost.

### SUMMARY OF THE INVENTION

The present invention has been accomplished under the circumstances in view. It is the main object of the present invention to provide an aquarium lamp bracket assembly, which has a compact structure and can be conveniently fastened to one glass panel of an aquarium housing by clamping. It is another object of the present invention to provide an aquarium lamp bracket assembly, which allows adjustment of the light radiating angle of the lamp tube. It is still another object of the present invention to provide an aquarium lamp bracket assembly, which can be conveniently fastened to one glass panel of an aquarium housing by a vacuum suction force.

To achieve these and other objects of the present invention, an aquarium lamp bracket assembly comprises a bracket and an adjustable lamp tube holder. The bracket comprises an elongated base frame, a coupling tube located at a front side of the base frame, a coupling hole axially defined in the coupling tube, a longitudinal opening cut through the periphery of the coupling tube and kept in communication with the coupling hole, a positioning means located at the inner perimeter of the coupling tube within the coupling hole, and a clamping member extended from a back side of the elongated base frame and defining a clamping mouth for fastening to a glass panel of an aquarium housing. The adjustable lamp tube holder comprises a pivot shaft inserted into the coupling hole in the coupling tube and kept in friction engagement with the positioning means, a lamp tube holder shell for holding a lamp tube, and a neck connected between the periphery of the pivot shaft and a back side of the lamp tube holder shell and inserted through the longitudinal opening of the bracket.

Further, the clamping member of the bracket comprises a first sloping wall obliquely extended from one lateral side of the elongated base frame, a pressure plate disposed in proximity to an opposite lateral side of the elongated base frame and defining with the opposite lateral side of the elongated base frame the clamping mouth, and a second sloping wall obliquely connected between the first sloping wall and the pressure plate.

Further, the clamping member of the bracket further comprises an auxiliary clamping plate located at an inner side of the first sloping wall and kept in proximity to the elongated base frame.

Further, the bracket further comprises a mounting means formed integral with the clamping member for mounting. Further, the mounting means can be a vacuum mount.

Further, the positioning means of the bracket comprises a plurality of longitudinal positioning teeth spaced around the inner perimeter of the coupling tube within the coupling hole. Further, the pivot shaft of the adjustable lamp tube holder is peripherally toothed for friction engagement with the longitudinal positioning teeth of the bracket.

### BRIEF DESCRIPTION OF THE DRAWINGS

FIG. 1 is a front view of an aquarium lamp bracket assembly in accordance with the present invention.
FIG. 2 is an exploded view of the aquarium lamp bracket assembly in accordance with the present invention.
FIG. 3 corresponds to FIG.1, illustrating the angular position of the adjustable lamp tube holder adjusted relative to the bracket.
FIG. 4 is a schematic front view of an alternate form of the aquarium lamp bracket assembly in accordance with the present invention.
FIG. 5 is a schematic applied view of the present invention, illustrating the clamping member of the aquarium lamp bracket assembly clamped on the housing of an aquarium and the angular position of the lamp tube adjusted.
FIG. 6 is a schematic drawing illustrating an aquarium lamp bracket assembly used in an aquarium in accordance with the present invention.

### DETAILED DESCRIPTION OF THE PREFERRED EMBODIMENT

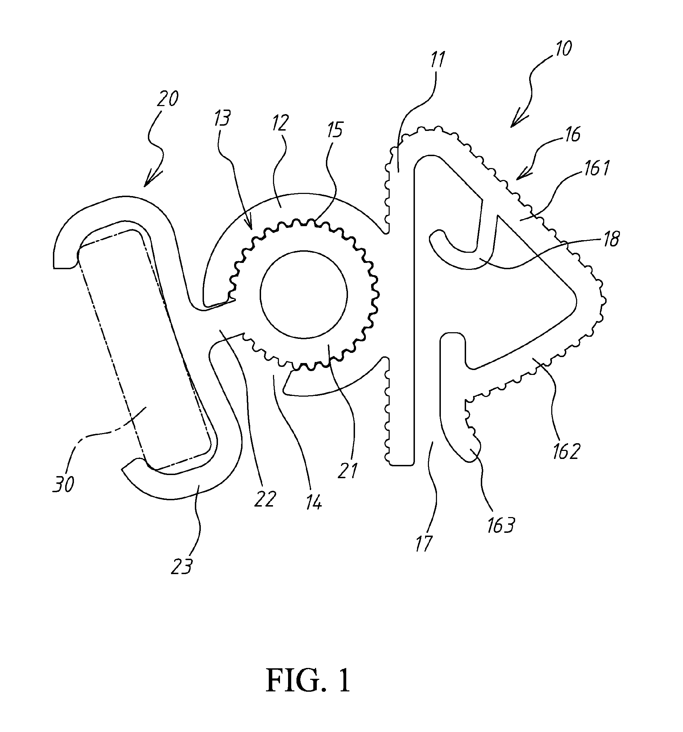

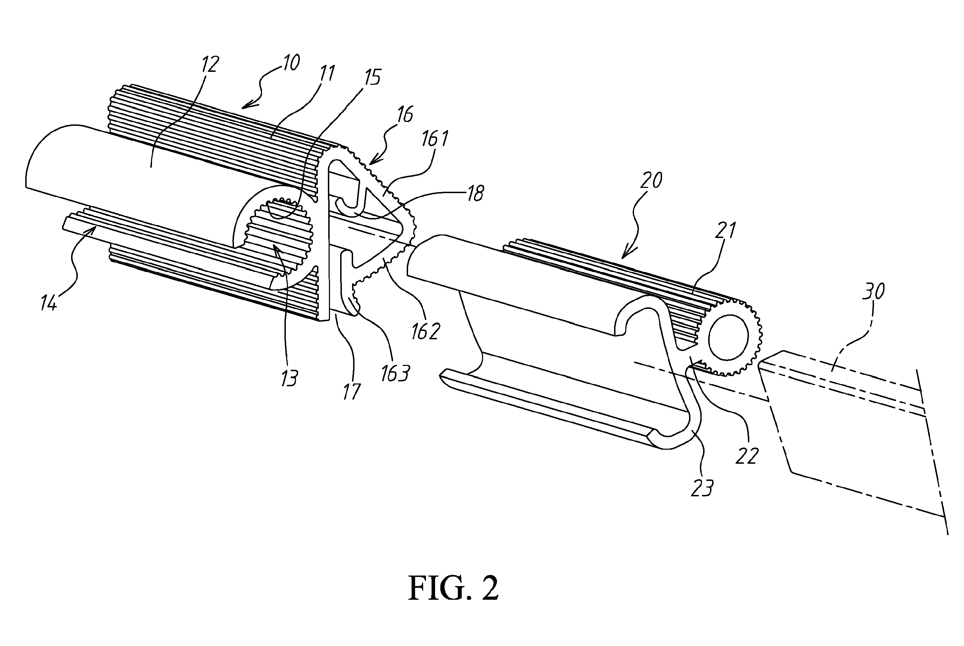

Referring to FIGS. 1 and 2, an aquarium lamp bracket assembly in accordance with the present invention is shown. The aquarium lamp bracket assembly comprises a bracket **10,** and an adjustable lamp tube holder **20** mounted in the bracket body **10** to hold a lamp tube **30.** The lamp tube **30** can be, for example, but not limited to, a LED tube.

The bracket **10** comprises an elongated base frame **11,** a coupling tube **12** located at one side of the base frame **11,** a coupling hole **13** axially defined in the coupling tube **12,** a longitudinal opening **14** cut through the peripheral wall of the coupling tube **12** and kept in communication with the coupling hole **13,** a positioning means, for example, longitudinal positioning teeth **15** spaced around the inner perimeter of the coupling tube **12** within the coupling hole **13,** and a clamping member **16** extended from one lateral side of the elongated base frame **11,** and clamping mouth **17** defined between the opposite lateral side of the elongated base frame **11** and the distal end of the clamping member **16.**

Preferably, the clamping member **16** comprises a first sloping wall **161** obliquely extended from one lateral side of the elongated base frame **11,** a pressure plate **163** disposed in proximity to the opposite lateral side of the elongated base frame **11** and defining with the opposite lateral side of the elongated base frame **11** the aforesaid clamping mouth **17,** and a second sloping wall **162** obliquely connected between the first sloping wall **161** and the pressure plate **163.**

More preferably, an auxiliary clamping plate **18** is located at the inner side of the first sloping wall **161** and kept in proximity to the elongated base frame **11.**

The adjustable lamp tube holder **20** comprises a peripherally toothed pivot shaft **21** inserted into the coupling hole **13** in the coupling tube **12** and kept in friction engagement with the longitudinal positioning teeth **15,** a lamp tube holder shell **23** having an inverted U-shaped profile for holding the lamp tube **30** for enabling the lamp tube **30** to emit light radially toward the outside of the aquarium lamp bracket assembly, and a neck **22** connected between the toothed periphery of the peripherally toothed pivot shaft **21** and a back side of the lamp tube holder shell **23** and inserted through the longitudinal opening **14** of the bracket **10.**

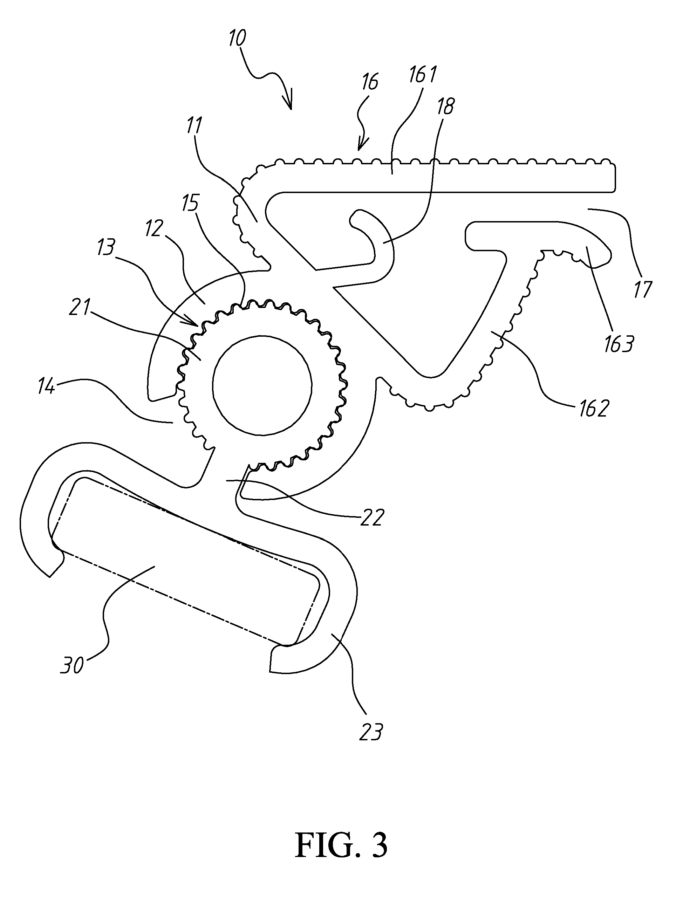

Referring to FIG. 3, an alternate form of the aquarium lamp bracket assembly is shown. This alternate form is substantially similar to that shown in FIG. 1 with the exception of the extending direction of the clamping mouth **17.** In the embodiment shown in FIG. 1, the clamping mouth **17** extends vertically downwards. In the embodiment shown in FIG. 3, the clamping mouth **17** extends in horizontally.

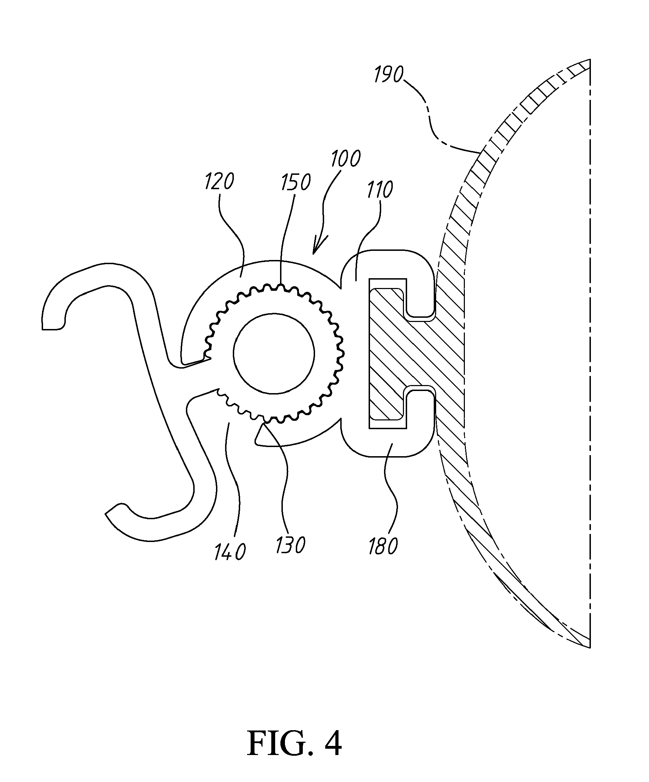

FIG. 4 illustrates another alternate form of the bracket of the aquarium lamp bracket assembly in accordance with the present invention. The bracket **100** in accordance with this alternate form comprises an elongated base frame **110,** a coupling tube **120** located at a front side of the elongated base frame **110,** a coupling hole **130** axially defined in the coupling tube **120,** a longitudinal opening **140** cut through the peripheral wall of the coupling tube **120** and kept in communication with the coupling hole **130,** a positioning means, for example, longitudinal positioning teeth **150** spaced around the inner perimeter of the coupling tube **120** within the coupling hole **130,** a clamping member **180** located at an opposite side of the elongated base frame **11,** and mounting means, for example, a vacuum mount **190** connected to the clamping member **180** and fastenable to a flat surface, for example, one glass panel of an aquarium housing.

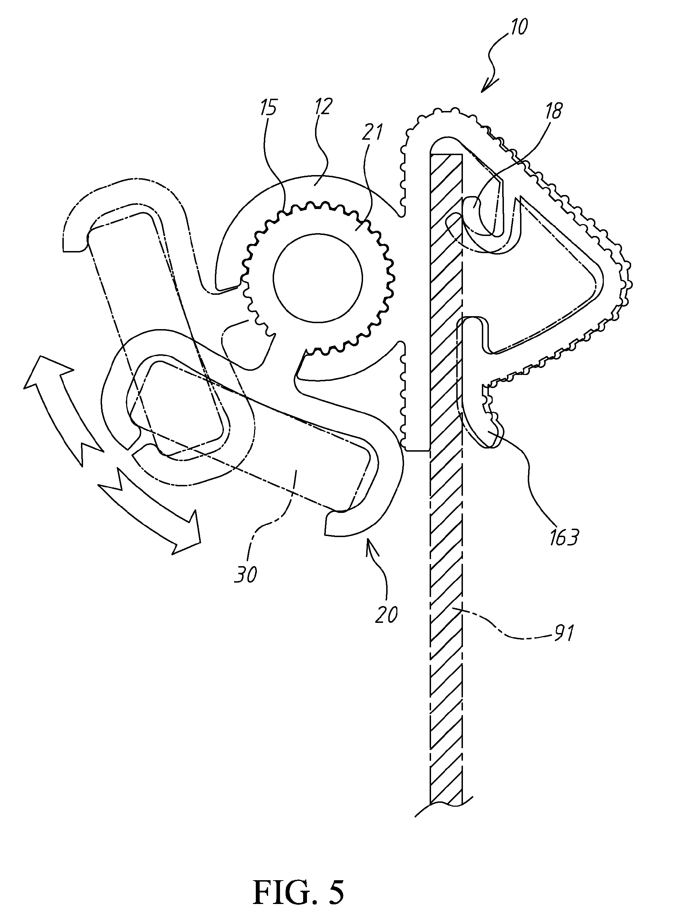

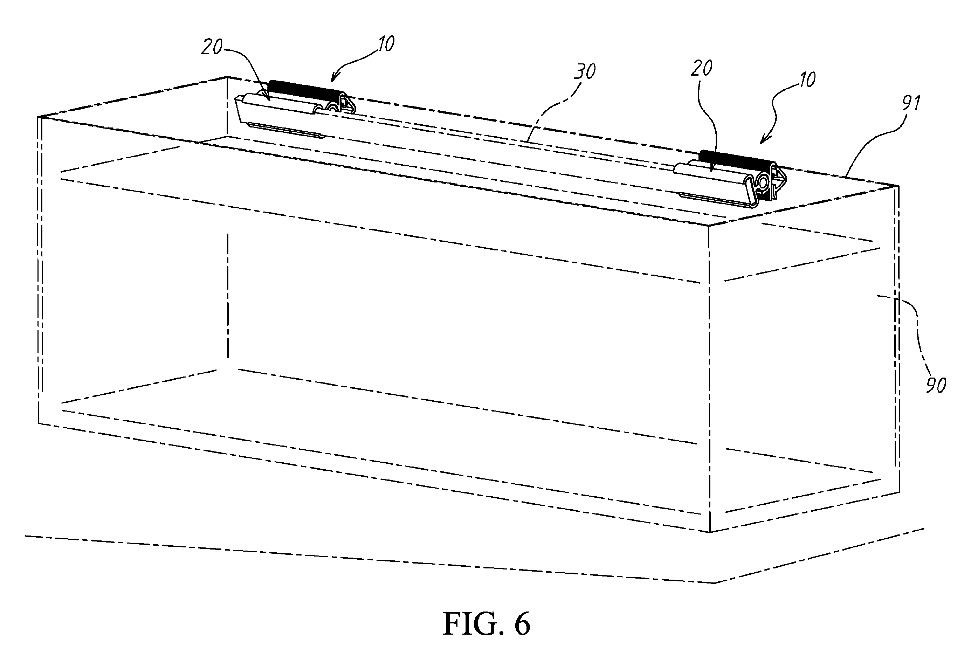

Referring to FIGS. 5 and 6, the pressure plate **163** and auxiliary clamping plate **18** of the clamping member **16,** the bracket **10** can be clamped on one glass panel **91** of an aquarium housing **90.** After the clamping member **16** is fastened to the glass panel **91** of the aquarium housing **90,** the user can bias the rotate the adjustable lamp tube holder **20** relative to the bracket **10** to adjust the angular position of the peripherally toothed pivot shaft **21** in the coupling hole **13** inside the coupling tube **12** to shift the clamping mouth **17** in a range within 21°∼69°.

In conclusion, the invention provides an aquarium lamp bracket assembly, which has the advantages of low manufacturing cost, ease of quick installation and illuminating angle adjustability.

Although particular embodiments of the invention have been described in detail for purposes of illustration, various modifications and enhancements may be made without departing from the spirit and scope of the invention. Accordingly, the invention is not to be limited except as by the appended claims.

## Claims

1. An aquarium lamp bracket assembly, comprising:
a bracket (10;100) comprising an elongated base frame (11;110), a coupling tube (12;120) located at a front side of said base frame (11;110), a coupling hole (13;130) axially defined in said coupling tube (12;120), a longitudinal opening (14;140) cut through the periphery of said coupling tube (12;120) and kept in communication with said coupling hole (13;130), a positioning means (15; 150) located at the inner perimeter of said coupling tube (12;120) within said coupling hole (13;130), and a clamping member (16;180) extended from a back side of said elongated base frame (11;110) and defining a clamping mouth (17;170) for fastening to a glass panel (91) of an aquarium housing (90); and
an adjustable lamp tube holder (20) comprising a pivot shaft (21) inserted into said coupling hole (13;130) in said coupling tube (12;120) and kept in friction engagement with said positioning means (15;150), a lamp tube holder shell (23) for holding a lamp tube (30), and a neck (22) connected between the periphery of said pivot shaft (21) and a back side of said lamp tube holder shell (23) and inserted through said longitudinal opening (14;140) of said bracket (10;100).

2. The aquarium lamp bracket assembly as claimed in claim 1, wherein said clamping member (16) comprises a first sloping wall (161) obliquely extended from one lateral side of said elongated base frame (11), a pressure plate (163) disposed in proximity to an opposite lateral side of said elongated base frame (11) and defining with said opposite lateral side of said elongated base frame (11) said clamping mouth (17), and a second sloping wall (162) obliquely connected between said first sloping wall (161) and said pressure plate (163).

3. The aquarium lamp bracket assembly as claimed in claim 2, wherein said clamping member (16) further comprises an auxiliary clamping plate (18) located at an inner side of said first sloping wall (161) and kept in proximity to said elongated base frame (11).

4. The aquarium lamp bracket assembly as claimed in claim 1, wherein said bracket (100) further comprises a mounting means connected to said clamping member (180) for mounting.

5. The aquarium lamp bracket assembly as claimed in claim 4, wherein said mounting means is a vacuum mount (190).

6. The aquarium lamp bracket assembly as claimed in claim 1, wherein said positioning means (15;150) of said bracket (100) comprises a plurality of longitudinal positioning teeth spaced around the inner perimeter of said coupling tube (120) within said coupling hole (130); said pivot shaft (21) of said adjustable lamp tube holder (20) is peripherally toothed for friction engagement with said longitudinal positioning teeth of said bracket (110).

7. The aquarium lamp bracket assembly as claimed in claim 2, wherein said positioning means (15) of said bracket (100) comprises a plurality of longitudinal positioning teeth spaced around the inner perimeter of said coupling tube (12;120) within said coupling hole (13;130); said pivot shaft (21) of said adjustable lamp tube holder (20) is peripherally toothed for friction engagement with said longitudinal positioning teeth of said bracket (10;100).

8. The aquarium lamp bracket assembly as claimed in claim 3, wherein said positioning means of said bracket (10;100) comprises a plurality of longitudinal positioning teeth spaced around the inner perimeter of said coupling tube (12;120) within said coupling hole (13;130); said pivot shaft (21) of said adjustable lamp tube holder (20) is peripherally toothed for friction engagement with said longitudinal positioning teeth of said bracket (10;100).

9. The aquarium lamp bracket assembly as claimed in claim 4, wherein said positioning means of said bracket (10;100) comprises a plurality of longitudinal positioning teeth spaced around the inner perimeter of said coupling tube (12;120) within said coupling hole (13;130); said pivot shaft (21) of said adjustable lamp tube holder (20) is peripherally toothed for friction engagement with said longitudinal positioning teeth of said bracket (10;100).

10. The aquarium lamp bracket assembly as claimed in claim 5, wherein said positioning means of said bracket (10;100) comprises a plurality of longitudinal positioning teeth spaced around the inner perimeter of said coupling tube (12;120) within said coupling hole (13;130); said pivot shaft (21) of said adjustable lamp tube holder (20) is peripherally toothed for friction engagement with said longitudinal positioning teeth of said bracket (10;100).
